# EUROPEAN PATENT APPLICATION

(11) **EP 2 824 323 A1**
(43) Date of publication of application: **14.01.2015**
(21) Application number: 13176345.0
(22) Date of filing: 12.07.2013
(51) Int. Cl.: F03D 7/04, F03D 7/02

(54) **Operating wind turbines as damping loads**

(71) Applicant: Siemens Aktiengesellschaft, 80333 München (DE)
(72) Inventor: Andresen, Björn, 8752 Ostbirk (DK); Goldenbaum, Nikolaus, Glasgow, G63 9DE (GB); Stoettrup, Michael, 7400 Herning (DK); Thisted, Jan, 8830 Tjele (DK); Yin, Bo, 7330 Brande (DK)

(57) **Abstract**

There is described a control device for a wind park, the wind park comprising a plurality of wind turbines for generating electric power, wherein the wind turbines are electrically interconnected by a wind park grid. The described control device comprises (a) a determining unit for determining whether a wind park load for consuming electric power from the wind park grid is to be enabled, (b) a calculating unit for calculating a power reference value for each of the plurality of wind turbines, the power reference value being indicative of the amount of power which the corresponding wind turbine should produce, and (c) a transmitting unit for transmitting the calculated power reference values to the corresponding wind turbines, wherein, if the determining unit has determined that the wind park load is to be enabled, at least one of the power reference values calculated by the processing unit is negative. Furthermore, there is described a wind park comprising a plurality of wind turbines and a control device. Yet further, a method and a computer program are described.

## Description

### Field of Invention

The present invention relates to the field of electric power producing wind farms, in particular to consumption of excess electric power produced by a wind farm.

### Art Background

In modern wind farms, there are several scenarios where a load is needed to consume at least a part of the electric power produced by the wind turbines of the wind farm and to ensure transient stability and/or short term stability.

A first example of such a scenario is during black start, where all wind turbines are disconnected from the main grid. In order to establish re-connection to and re-synchronization with the main grid, some of the wind turbines are running in V/f (voltage/frequency) mode and starting to produce electricity before the re-connection with the main grid actually takes place. Thus, as the main grid is not yet available, a local load is required to absorb or damp the power generated by the V/f controlled wind turbines. This scenario also applies to so-called "island operation" (where the wind turbines are connected to a closed grid together with another kind of power generator, such as a diesel generator) and commissioning (where the wind turbines are being tested before they are connected to an external grid).

A second example scenario is that in many large offshore wind farms, the wind turbines are connected to the main grid via a HVDC connection. In case the HVDC connection fails, the electric power generated by the wind farm has to be quickly dissipated before turbine power is reduced to 0 MW.

A third example scenario may occur during a low voltage ride through in a wind farm connected to main grid via HVDC. Also in this case, a large load is needed to dissipate excess power.

A fourth scenario where a load is needed to dissipate excess power from a wind park occurs when the wind park is connected to a weak grid, such that the transmission capacity is limited.

A fifth scenario may occur if there is a need for absorbing power from other energy producers due to system stability issues (e.g., frequency increase in the system or partly Island operation, i.e. few consumers together with energy production).

The loads needed in the above scenarios are usually provided in form of large resistor banks. However, such resistor banks are large and expensive to install and service, in particular in connection with offshore wind farms.

Accordingly, there may be a need for a simple and cost efficient way of absorbing excess power produced by a wind farm.

### Summary of the Invention

This need may be met by the subject matter according to the independent claims. Advantageous embodiments of the present invention are described by the dependent claims.

According to a first aspect of the invention there is provided a control device for a wind park, the wind park comprising a plurality of wind turbines for generating electric power, wherein the wind turbines are electrically interconnected by a wind park grid. The described control device comprises (a) a determining unit for determining whether a wind park load for consuming electric power from the wind park grid is to be enabled, (b) a calculating unit for calculating a power reference value for each of the plurality of wind turbines, the power reference value being indicative of the amount of power which the corresponding wind turbine should produce, and (c) a transmitting unit for transmitting the calculated power reference values to the corresponding wind turbines, wherein, if the determining unit has determined that the wind park load is to be enabled, at least one of the power reference values calculated by the processing unit is negative.

This aspect of the invention is based on the idea that the function of a wind park load can be enabled by transmitting a negative power reference value to at least one wind turbine, such that the at least one wind turbine will absorb electric power from the wind park grid by being driven as an electric machine against the wind. Thereby, if the wind park grid is unable to deliver the electric power, which is produced by the wind turbines that receive positive power reference values, to an external grid or the like, the at least one wind turbine may act as a load. Accordingly, the control device according to this aspect is capable of implementing a wind park load without the need for additional hardware, such as a resistor bank.

The determining unit may determine that the wind park load is to be enabled based on manual operator input. The determination may also be based on receiving one or more control signals from other units or devices of a wind park, e.g. from a wind park monitoring system which monitor various state variables of the wind farm using appropriate measurement equipment. In either case, the need for enabling the wind park load may be predetermined in the sense that it relates to a particular mode of operating the wind park, or the need for enabling the wind park load may occur suddenly and temporarily due to a fault or certain external conditions.

Each wind turbine reference value is an input signal to the control system of a single corresponding wind turbine. A wind turbine reference value can thus be used by a wind turbine control system which compares a measured power value (the power that the wind turbine currently produces) with the received reference power value and adjusts the wind turbine parameters (such as rotational speed, torque and pitch angle) that influence the produced power in order to minimize the difference between the measured power and the reference power value.

The (absolute) power reference values may be in the range of 0,5 MW (megawatt) to 20 MW, such as in the range of 1 MW to 15 MW, such as in the range of 2 MW to 10 MW, such as in the range of 3 MW to 8 MW, such as in the range of 4 MW to 6 MW, such as around 5 MW.

By operating at least one wind turbine of a wind park with a negative power reference value, this at least one wind turbine can act as a load absorbing power produced by other wind turbines that are operated normally, i.e. with positive power reference values. Thereby, in cases where the wind park for some reason cannot deliver electric power to an external recipient, such as a main power grid, a number of wind turbines may keep producing power instead of being shut down without the need for a dedicated wind park load, such as an expensive resistor bank of considerable size.

According to an embodiment of the invention, the transmitting unit is adapted to transmit the power reference values to the corresponding wind turbines via a wind park communication network.

The wind park communication network may be any suitable communication network, such as a LAN network, where each wind turbine is connected to the network via an electrical or optical communication cable.

According to a further embodiment of the invention, the sum of the calculated power reference values is substantially zero.

When at least one of the power reference values is negative, a sum of substantially zero will assure that substantially all power produced by the wind turbines of a wind park will be consumed by the at least one wind turbine receiving a negative power reference value. Thus, even in a case where the wind park cannot deliver any power to an external recipient, a number of wind turbines will be able to produce electric power "as usual" without the need for a dedicated load, such as a resistor bank, in the wind park.

According to a further embodiment of the invention, the sum of the calculated power reference values is negative.

Thereby, also externally produced power may be absorbed by the at least one wind turbine receiving a negative power reference value.

According to a further embodiment of the invention, the number of calculated negative power reference values is equal to or larger than the number of calculated positive power reference values.

By having at least the same number of negative power reference values as the number of positive power values, it can be assured that the number of wind turbines acting as loads at least equals the number of wind turbines that produce (positive) power. Thereby, each wind turbine acting as a load will maximally have to absorb the amount of power produced by one power producing wind turbine. Furthermore, by having more power absorbing wind turbines than power producing wind turbines, it can be assured that the total load capacity exceeds the total power production such that a situation with insufficient load capacity can be prevented.

According to a further embodiment of the invention, the determining unit is adapted to determine that the wind park load is to be enabled if one of the following events occurs: a black start, a HVDC failure, a low voltage ride through, transmission limitations, island operation, grid constraints. In case of a black start or island operation, the wind park is started without connection to the main power grid, such that a load is needed to absorb the power produced by the active wind turbines until the connection with the main power grid is established.

In case of a HVDC failure or transmission limitations, power transmission to the main grid is suddenly not possible or limited and a load is needed to absorb power until the failure or limitation has been overcome or during shut down of the wind park.

In case of a low voltage ride through, the main power grid is temporarily unable to consume all power produced by the wind park and a load is consequently needed in order to absorb the excess power produced by the wind park.

In the above embodiments, the control unit may be configured as a separate unit or as a part of a park pilot, i.e. the main control system of the wind park. Furthermore, the determining, calculating and transmitting units may be configured as separate physical units, e.g. on a printed circuit board, or they may configured as functional parts of a software-based control system.

According to a second aspect of the invention, there is provided a wind park for producing electric power. The described wind park comprises (a) a plurality of wind turbines for generating electric power, the wind turbines being electrically interconnected by a wind park grid, and (b) a control device according to the first aspect or any of the above embodiments.

This aspect of the invention is based on the idea that the function of a wind park load can be enabled by transmitting a negative power reference value to at least one of the wind turbines, such that the at least one wind turbine will absorb electric power from the wind park grid by being driven as an electric machine against the wind. Thereby, if the wind park is unable to deliver the produced electric power to an external main power grid or the like, the at least one wind turbine will act as a load. Accordingly, the wind park according to this aspect is capable of enabling a wind park load without the need for additional hardware, such as a resistor bank.

By operating the at least one wind turbine of the wind park with a negative power reference value, this at least one wind turbine can act as a load absorbing power produced by other wind turbines that are operated normally, i.e. with positive power reference values. Thereby, in cases where the wind park cannot deliver electric power to an external recipient, a number of wind turbines may keep producing power without the need for a dedicated wind park load, such as an expensive resistor bank of considerable size.

According to an embodiment of the invention, the wind turbines are adapted to be driven as an electric machine in response to receiving a negative power reference value, thereby consuming electric power from the wind park grid.

More specifically, in case of receiving a negative power reference value, the wind turbines are capable of being turned against the wind, i.e. acting as a large fan instead of a generator.

Depending on the amount of power the wind turbine has to absorb, i.e. the absolute value of the negative power reference value, the wind turbine may further be adapted to adjust the rotational speed and the pitch angle of the rotor blade in order to optimize the load function and at the same time minimizing the risk of damage.

According to a further embodiment of the invention, the wind park further comprises a load unit for absorbing electric power.

In some situations a relatively small dedicated wind park load unit, e.g. in the form of a resistor bank, may be beneficial in order to absorb power for a short time during activation of the at least one wind turbine acting as a load, i.e. until the at least one wind turbine has switched from acting as a generator to acting as a load in response to receiving a negative power reference value. However, such a wind park load unit is small and inexpensive in comparison to a load unit designed to act as a single load for the entire wind park.

According to a third aspect of the invention, there is provided a method of controlling a wind park, the wind park comprising a plurality of wind turbines for generating electric power, wherein the wind turbines are electrically interconnected by a wind park grid. The described method comprises (a) determining whether a wind park load for consuming electric power from the wind park grid is to be enabled, (b) calculating a power reference value for each of the plurality of wind turbines, the power reference value being indicative of the amount of power which the corresponding wind turbine should produce, and (c) transmitting the calculated power reference values to the corresponding wind turbines, wherein, (d) if it has been determined that the wind park load is to be enabled, at least one of the calculated power reference values is negative.

This aspect of the invention is based on the same idea as the first and second aspects described above.

According to a fourth aspect of the invention there is provided a computer program for controlling a wind park. The described computer program comprises computer executable instructions which, when executed by a computer, causes the computer to perform the method according to the preceding claim.

This aspect of the invention is based on the same idea as the third aspect described above.

According to a fifth aspect of the invention there is provided a wind turbine adapted to be driven as an electric machine in response to receiving a negative power reference value, thereby consuming electric power.

According to a sixth aspect of the invention there is provided a use of a wind turbine as a load by driving the wind turbine as an electric machine in response to receiving a negative power reference value, thereby consuming electric power.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a schematic overview of a wind turbine.
Figure 2 shows a block diagram of a grid side converter control system for a wind turbine.
Figure 3 shows a block diagram of a generator side converter control system for a wind turbine.
Figure 4 shows a principal block diagram of a wind turbine.

### Detailed Description

The illustration in the drawing is schematic. It is noted that in different figures, similar or identical elements are provided with the same reference numerals or with reference numerals which differ only within the first digit.

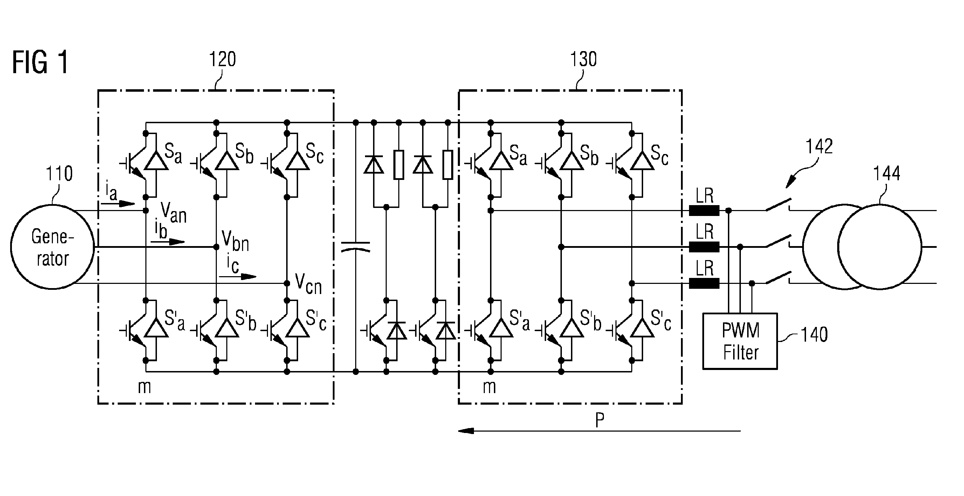

Figure 1 shows a schematic overview of a wind turbine. The wind turbine comprises a generator 110, a generator side converter system 120, a grid side converter system 130, a PWM filter 140, switches 142, and a transformer 144. More specifically, when a wind turbine rotor (not shown) is rotated due to wind impacting on corresponding rotor blades (not shown), the generator 110 transforms the rotational energy into three phases of electrical current. The electrical currents from the generator 110 are fed to the generator side converter system 120 and converted to DC. The DC current is in turn fed to the grid side converter system 130 which converts it into three phases of alternating currents. These AC currents are fed through a PWM filter 140 via switches 142 to the transformer 144 which is connected to a grid (not shown).

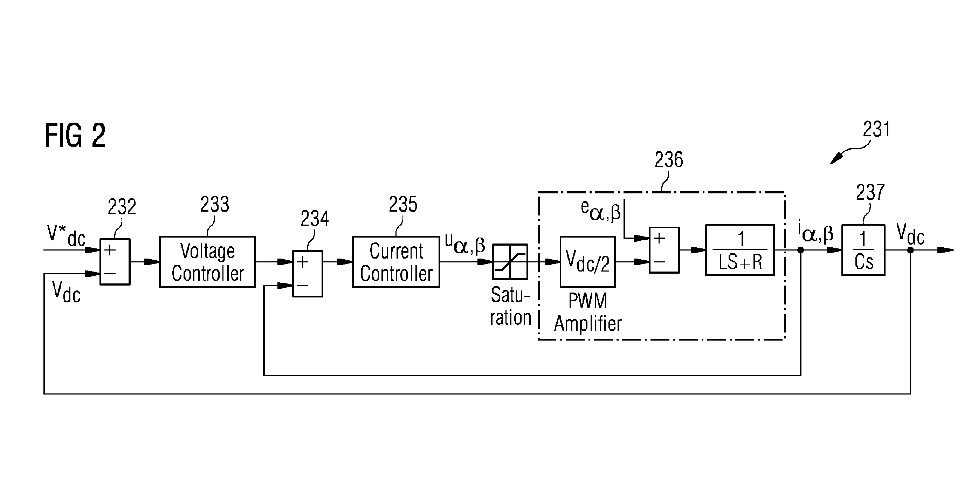

Figure 2 shows a block diagram of a grid side converter control system 231. The control system 231 comprises a subtraction unit 232, a voltage controller 233, a subtraction 234, a current controller 235, a grid side converter plant 236, and a plant for dc link capacitor bank 237. More specifically, the subtraction unit receives the present output voltage V_{DC} and a reference voltage V^{*}_{DC} as inputs and feeds the corresponding difference value to voltage controller 233. The output from voltage controller 233 is fed to the positive input of subtraction unit 234 and the current output current i_{α,β} is fed to the negative input of subtraction unit 234. The output from subtraction unit 234 is fed through current controller 235, PWM amplifier 236 and output impedance 237. Thereby, the grid side converter control system is capable of regulating the dc link voltage to its reference voltage by delivering the active power generated / consumed by the generator.

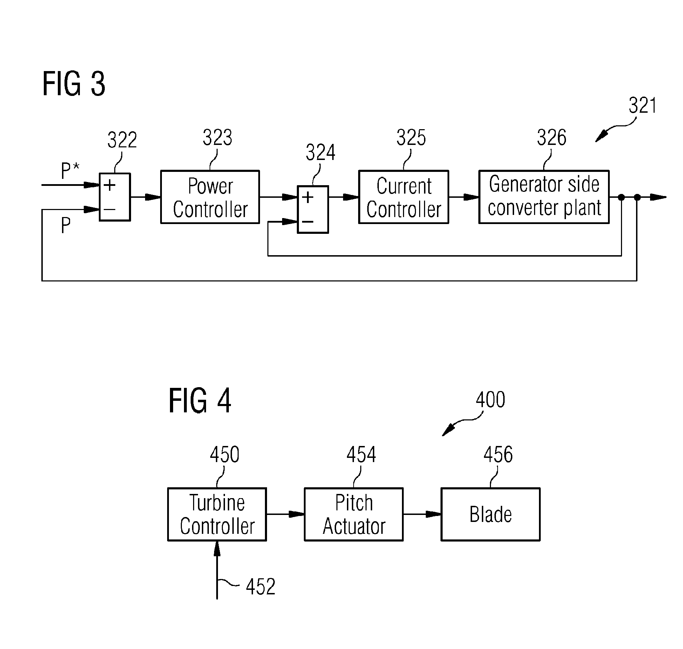

Figure 3 shows a block diagram of a generator side converter control system 321. The control system 321 comprises a subtraction unit 322, a power controller 323, a subtraction 324, a current controller 325, and a generator side converter plant 326. More specifically, the subtraction unit 322 receives power reference value P^{*} and actual power value P at its respective inputs and feeds the difference value, i.e. P^{*}-P to the power controller 323. The output from the power controller 323 is fed to the positive input of subtraction unit 324 and the difference relative to the actual output power P is fed to current controller 325. The output from current controller 325 is fed to the generator side converter plant 326 in order to adjust the frequency of the electrical power.

Figure 4 shows a principal block diagram of a wind turbine 400 in accordance with the present invention. As shown, the wind turbine 400 comprises a turbine controller 450, a pitch actuator 454 and a blade 456. It is noted that more than one blade 456 may be used and that the present disclosure relates equally to a wind turbine comprising a plurality of blades 456, e.g. 3 blades 456.

In operation, the wind turbine 400 receives a power reference value as well as various measurements values, such as blade position, rotor speed, consumed power etc., via input 452. It is noted that the input 452 may consist of several individual inputs although it is depicted as a single input in Figure 4. The power load caused by turning the blades of the wind turbine generator (not shown) is adjusted in view of the received power reference value. In order to adapt the power load to match the received power reference as closely as possible, the power load may be adjusted by adjusting the pitch angle of the blades 456 and/or by adjusting the rotational speed with which the blades are turned. Thus, the control system (turbine controller 450 in Figure 4) can freely and in dependency of the circumstances decide to adjust the power load by adjusting the rotational speed and/or the pitch angle of the blades 456.

More specifically, if the pitch angle is kept constant, the rotational speed is adjusted by the amount of power used to turn the rotor. Similarly, if the rotational speed is kept constant, the power can be adjusted by modifying the pitch angle of the blades 456. It is noted that the blade pitch angle does not have to be kept constant throughout the entire rotation. It could be an advantage from a mechanical load point of view to use a varying (e.g. sinusoidal) pitch angle as a function of where each blade is, i.e. to calculate a pitch reference to each blade.

As shown in Figure 4, the turbine controller 450 calculates a desired blade position and pitch actuator action for each blade 456 based on the power reference value and measurement data received via input 452. The resulting control signals is fed to the pitch actuator 454 which adjusts the pitch angle of the blade 456 accordingly.

In an embodiment of the present invention, a wind farm comprises a plurality of wind turbines corresponding to Figure 1. Each of the wind turbines comprises a grid side converter control system 231 and a generator side converter control system 321 corresponding to the respective illustrations of Figures 2 and 3. The wind turbines are connected to a wind park grid through the respective transformers 144 and to a wind part communication network (not shown). The wind turbines are controller by a control device (park pilot), which controls the individual wind turbines based on various internal parameters, such as measurement data relating e.g. to power, voltage, current, phase, etc. in the wind park grid, and external parameters, such as measurement and state data from an external utility grid. A part of this control consists in feeding a power reference value to each of the wind turbines through the wind park communication network in order to control the amount of power produced by each wind turbine. If a situation occurs which necessitates consumption of power through a load within the wind park, e.g. a situation where the external utility grid is disconnected or incapable of consuming some or all of the power produced by the wind park, the control device will generate one or more negative power reference values, such that the wind turbine(s) receiving the(se) negative power reference value(s) will produce negative power in the sense that it/they will be driven against the wind and thereby, by rotating in the opposite direction, act as a load consuming the excess power, i.e. the power which the wind park cannot deliver to an external utility grid.

The control device according to the present invention provides a significant improvement in short term power system stability without incurring significant additional cost. More specifically, the control device allows a wind park to handle short term HVDC failure and low voltage ride through in an efficient manner without the need for additional hardware, such as a resistor bank. Furthermore, the control device is capable of handling a black start without a dedicated load, such as a resistor bank.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A control device for a wind park, the wind park comprising a plurality of wind turbines for generating electric power, wherein the wind turbines are electrically interconnected by a wind park grid, the control device comprising
a determining unit for determining whether a wind park load for consuming electric power from the wind park grid is to be enabled,
a calculating unit for calculating a power reference value for each of the plurality of wind turbines, the power reference value being indicative of the amount of power which the corresponding wind turbine should produce, and
a transmitting unit for transmitting the calculated power reference values to the corresponding wind turbines,
wherein, if the determining unit has determined that the wind park load is to be enabled, at least one of the power reference values calculated by the processing unit is negative.

2. The device according to the preceding claim, wherein the transmitting unit is adapted to transmit the power reference values to the corresponding wind turbines via a wind park communication network.

3. The device according to any of the preceding claims, wherein the sum of the calculated power reference values is zero.

4. The device according to any of the preceding claims, wherein the number of calculated negative power reference values is equal to or larger than the number of calculated positive power reference values.

5. The device according to any of the preceding claims, wherein the determining unit is adapted to determine that the wind park load is to be enabled if one of the following events occurs: a black start, a HVDC failure, weak grid transmission limitations, and a low voltage ride through.

6. A wind park for producing electric power, the wind park comprising
a plurality of wind turbines for generating electric power, the wind turbines being electrically interconnected by a wind park grid, and
a control device according to any of the preceding claims.

7. The wind park according to the preceding claim, wherein the wind turbines are adapted to be driven as an electric machine in response to receiving a negative power reference value, thereby consuming electric power from the wind park grid.

8. The wind park according to preceding claim 6 or 7, further comprising a load unit for absorbing electric power.

9. A method of controlling a wind park, the wind park comprising a plurality of wind turbines for generating electric power, wherein the wind turbines are electrically interconnected by a wind park grid, the method comprising
determining whether a wind park load for consuming electric power from the wind park grid is to be enabled,
calculating a power reference value for each of the plurality of wind turbines, the power reference value being indicative of the amount of power which the corresponding wind turbine should produce, and
transmitting the calculated power reference values to the corresponding wind turbines,
wherein, if it has been determined that the wind park load is to be enabled, at least one of the calculated power reference values is negative.

10. A computer program for controlling a wind park, the computer program comprising computer executable instructions which, when executed by a computer, causes the computer to perform the method according to the preceding claim.

11. A wind turbine adapted to be driven as an electric machine in response to receiving a negative power reference value, thereby consuming electric power.

12. Use of a wind turbine as a load by driving the wind turbine as an electric machine in response to receiving a negative power reference value, thereby consuming electric power.
